Europäisches Patentamt

European Patent Office

Office européen des brevets

(11) Publication number: **0 167 694**

**A1**

# (12) EUROPEAN PATENT APPLICATION

(21) Application number: **84830174.3**

(22) Date of filing: **08.06.84**

(51) Int. Cl.⁴: **F 03 D 3/04**
F 03 D 9/02, F 03 D 1/04

(43) Date of publication of application:
**15.01.86 Bulletin 86/3**

(84) Designated Contracting States:
**AT BE CH DE FR GB LI LU NL SE**

(71) Applicant: **Marinucci, Alessandro**
**Via Portuense 1499**
**Roma(IT)**

(72) Inventor: **Marinucci, Alessandro**
**Via Portuense 1499**
**Roma(IT)**

(74) Representative: **Fiammenghi, Carlo et al,**
**c/o Fiammenghi-Fiammenghi Via Quattro Fontane, No.**
**31**
**I-00184 Roma(IT)**

(54) **Apparatus for the interception and storage of the eolian energy and for the utilization thereof.**

(57) An aeolian energy capture, storage and exploitation system in order either to provide electric power or pneumatic energy directly from the system and/or from aeolian energy storage means in form of compressed air, in which fixed walls (2), which are hollow inside, suitably oriented and shaped, are placed so as to form in pairs passageways with narrowings which are distributed around a vane rotor (3) connected to a compressor (7), which lets pressurized air in the internal cavity of each wall (2), and to an electric power generator (G). The walls (2) act thus as compressed air reservoir in order to supply the generator (G) when the wind subsides. In this case the generator (G) is disconnected from the rotor, and the compressor (7) is automatically disconnected when a predetermined value of the pressure in the interior of the air reservoir-walls (2) is reached, while a fan (G') supplied by the air stored in the air reservoir-walls (2) provides for keeping in function the electric power generator (G).

*FIG.1*

# APPARATUS FOR THE INTERCEPTION AND STORAGE OF THE AEOLIAN ENERGY AND FOR THE UTILISATION THEREOF

This invention relates to an aeolian energy capture, storage and exploitation system for large and small users in order either to provide electric power or pneumatic energy directly from the system and/or from aeolian energy storage means in form either of compressed air or potential energy.

The proposals for the exploitation of the energy supplied by the wind are numerous. Most of them seek to transform this energy in electric power. One of the problems hitherto encountered by the embodiment of the previous status of art is the impossibility to assure an uninterrupted supply of electric power in the time periods in which the wind subsides. It would be extremely expensive and beyond certain limits also impossible to store electric power so as to supply the stated users when the wind subsides, with the consequence that said users have to be supplied by means of traditional power source or to be left without electric power.
Another problem encountered in the hitherto known solutions which have been trying to overcome it for long time in differents ways has to be recognized in that rotors equipped with vanes of suitable dimensions and consequentely of heavy weight and requiring carrying structures particularly cumbersome and expensive have to be provided in order to capture as much as possible the wind necessary to start suitable equipment for the transformation of the energy which in turn are dimensioned according to the users to be supplied with this energy. On the other hand such rotors could be started only by very strong winds as they cannot be influenced by weak winds.
The possibility to capture and to trasform aeolian energy

0167694

- 2 -

is then conditioned not only by the cost and the overall
dimensions of the constructions, but also by a predetermined
minimum force of the wind under which the system cannot be
operated.

The object of the present invention is to provide an aeolian
energy capture system overcoming all above mentioned problems
and allowing aeolian energy to be captured and stored
immediately, whichever the force of the wind may be, wherein
the rotor of the system has neither great dimensions nor
expensive constructions, and the system itself can assure a
supply of electric or pneumatic power to large users to be
supplied with the one or the other form of energy obtained
by means of an almost complete transformation of the stored
aeolian energy.

A further object of the present invention is to provide a
system of the above mentioned type which is able to supply
small users, for instance domestic users with a complete
transformation of the stored aeolian energy.

The present invention achieves the object to supply large
users by capturing the wind by means of a stationary system
comprising walls of concrete or reinforced concrete, which
are hollow inside, suitably oriented, shaped and dimensioned
so as to provide in pairs real narrowings around a rotor
having vanes and a vertical axis which is connected at its
upper end to a compressor which lets in air under pressure
within each single wall and at its lower end to an electric
power generator, whereby said walls have the function of
compressed air resevoirs, which automatically supply the
electric power generator in case the wind subsides, the
generator being automatically disconnected from the rotor
and the compressor being automatically switched off at a predetermined value of the internal pressure of the air reservoir-walls, while a fan supplied with the compressed air stored in the air reservoir-walls provides to keep in function the electric power generator.

Such systems find their best and advantageous application in supplying large users. Their overall dimensions and consequently their cost would not be suitable for smaller users such as a single block of buildings, villas, farms, country-houses a.s.o..On the other hand it would not be possible to reduce their dimensions especially with regard to the height without great disadvantage for the efficiency. In fact in such system the wind is captured at each narrowing between two air reservoir-walls by only one of the vanes which are opposed to each other with respect to the vertical axis of rotation, whereas the efficiency is assured not only by the width of the surface of the single vanes, but above all by the height thereof. ·

By reducing the dimensions of the vanes the yield would not be sufficient even for the small users. Furthermore in the systems of the above mentioned type the aeolian energy stored in form of compressed air is not wholly restored because the supply thereof is stopped as soon as the stated pressure in the air reservoir-walls falls to the level of the operating pressure which is predetermined by a proper controller. This particular could be considered negligible in the great systems designed for large users, the topographic location of which can be object of choice among other things. In the little systems designed for smaller users, the location of which is set in most cases in areas where the wind is not constant, it is absolutely necessary to have also an even small amount of stored energy which will be able to supply the users in the periods in which the wind subsides.

Therefore, in case of small users, this invention achieves its further object by the use of a rotor equipped with vanes having a horizontal axis, wherein:

- the rotor is installed so as to freely rotate by 360° around the axis of a vertical shaft, the vanes rotating eccentrically with respect to the latter, in the middle of at least three wind-conveying walls being placed according to a funnel relationship to each other and to said rotor and having their internal edges aligned on a common circumference;

- the opposed surface of consecutive walls being deviated from their respective, vertical center line so as to taper to each other and to the inside, each of them assuming at the same time a progressive and accentuated concavity which is symmetrical to that of the opposed surface:

- the axis of the rotor equipped with vanes being mounted in the horizontal center plane, which is normal to said wind-conveying walls and being able to operate by means of said vertical shaft and electric power generator and/or means able to lift a weight.

On the other hand the use of a rotor provided with vanes having a horizontal axis could not be imagined in a system of the above described type.In fact, in case of a rotor with o vanes having a horizontal axis and operating in a vertical plane, the rotor in turn having to rotate by 360° around the vertical axis, the height of the wind-conveying walls should be equal to the distance between the internal edges of opposed walls,i.e. tne rotor with its vanes should operate within a square space,which would involve a relevant increasing of cost. There would be besides difficulties of linking the horizontal axis of the rotor with the vertical axis of the power take-off, especially in view of the strong vibrations to which the rotor would be subjected. It is therefore necessary, in case of smaller users, to reduce the dimensions of the system even if the principles of the present invention are of course maintained in view of a stationary construction capturing the wind and having an orientation and a form such as to promote an increasing of the wind speed in the area of impact with the rotor. In fact the main concept of this invention consists in: collecting the wind in a great quantity due to the dimension and/or the shape of a stationary system; capturing the wind whichever way it is blowing from as the fixed walls are oriented according to the wind rose; exploiting the energy whichever force it has, because the position of the walls follows the principle of Bernoulli according to which the speed of the wind increases at narrowings; storing the aeolian energy in form of compressed air, for example, in the walls itself which form the stationary system or in form of potential energy in case of smaller systems; and lightening the construction of the rotor, which measure is possible thanks to the preceeding features. The first and immediate advantage achieved by this invention in case of both large and small users is that the wind is captured whichever direction it is blowing from, and the aeolian energy is exploited whichever force the wind has, and this is achieved as to increase the speed of rotation of the rotor in the presence of a strong air current and to have then a greater storage power as to exploit weak air currents which would not operate a rotor of the conventional type.

As for a system for large users such as briefly described before, this invention provides that said air reservoir-walls are shaped in form of spindle and are placed along a circumference, so that their ends directed towards the center of the system are slightly curved and each side of these wall

0167694

ends which is directed inwards is shaped like an arch of circumference having its geometric center at the axis of the rotor which is equipped with vanes and is placed at the center of these arches of circumference, the bending radius of which is generally equal to that of the vanes. Thus, whichever direction the wind is blowing from, the capture thereof is achieved and it is however conveyed up to the impact with the rotor equipped with vanes so that the latter is caused to rotate in only one direction.The importance of this detail will be apparent from the following description. The inside of the air reservoir-walls is of course lined with a suitable material so as to assure the air tightening. The dimensions of the air reservoir-walls can be predetermined according to the needs of the users to be supplied. Their orientation will be chosen according to the state of the winds in the area concerned, where the system is to be installed.

According to the present invention the shaft of the rotor equipped with vanes, which is placed at the center of the air reservoir-walls, is rotatably supported in its lower part by a bearing placed on the lower base slab of the air reservoir-walls. In a hole formed in the soil below the base plane of said air reservoir-walls the shaft of the rotor is connected to an electric power generator which is in turn connected to a fan through a free-wheel drive.

Still according to the present invention the rotor equipped with vanes is connected to the generator in such a way that they automatically disengage from each other when the wind subsides and automatically engage each other when the wind blows. This will enable the generator to be directly operated by the rotor in case of wind, while in case of lack of wind the fan will be supplied with the compressed air coming from the air reservoir-walls and will operate the generator leaving the rotor under standstill conditions. On the contrary the free-wheel drive disengages the fan when the generator is operated by the vane rotor.

According to the present invention the shaft of the vane rotor is rotatably supported in its upper part by a bearing placed on the covering slab of the air reservoir-walls and has a drive coupling with an upper compressor through a clutch which is raised by means of suitable jacks along with the compressor, when the pressure in the air reservoir-walls has reached a certain predetermined value, while it is lowered when the pressure falls under such a value. Thus the compressor is caused to be disengaged from the vane rotor when the air reservoir-walls are loaded.

Conduits, valves, gate valves and manometers make the system according to the more detailled, following description with reference to the drawings.

As for a system for a smaller user this invention provides that to the air reservoir-walls, which convey the wind and are placed in form of a funnel directed inwards, a concavity is given which is progressively accentuated to take the most advantage of the principle of Bernoulli so as to provide proper air inlets which promote the increasing of the speed of the wind hitting the vanes of the rotor. Thus the internal contour formed by the walls can assume any geometric configuration, i.e. oval, elliptical or circular.

It should be noted to this reagrd that the circumference, along which the internal edges of a number $n$ of wind-conveying walls are aligned, is divided thereby in $n$ equal parts. The distance between the internal, straight edges of two consecutive walls is then equal to 1/n.

Obviously the wind-conveying walls could also be even and straight, but they would have a lower efficiency regarding the capturing of the wind.

According to the invention the vane rotor having a horizontal axis is placed so as to freely rotate by 360° around a vertical axis eccentrically with respect to the latter by means of an assembly of bevel gears consisting of ring gears and side pinions. Thus the wind, whichever way it is blowing from, is captured anyhow by the rotor's vanes which are positioned due to the above mentioned eccentricity so as to be always hit on their rear surface.

The circumference, which is a section of a circular right cylinder and along which the internal edges of the wind-conveying walls are aligned, has according to the present invention a diameter which is anyway greater than the length of the rotor's vane pairs. The height of the wind-conveying walls according to the present invention is equal to the distance between the internal edges of two opposed walls so that the internal space, in which the rotor equipped with vanes having a horizontal axis operates, has a square configuration.

The present invention provides in this case that the captured aeolian energy is stored in form of potential energy by means of a weight. This weight is hoisted by a windlass between two vertical walls or within a fluid reservoir in which the weight lies and is fluid-tight with the other walls of the reservoir, with the aid of a hydraulic pump. The size of the weight, the height to which it is hoisted and the quantity of fluid pumped in the reservoir will be selected as a function of the user's needs with regard to the periods in which the wind subsides. Thus a restoring of the stored and predetermined energy is achieved (except of course for the manifest friction loss a.s.o.).

It would be obviously possible to store the aeolian energy also in form of compressed air. The cost of this embodiment and the maintenance of the system would be certainly reduced. However, as above mentioned, in areas where the wind is scarcely blowing or it is not constant, an even small amount of energy can be also absolutely necessary for the small systems in order to overcome the problems of wind lacks. The greater cost of the system is in this case justified.

Some preferred embodiment of the present invention will now be described, by way of example and then without any restrictions, with reference to the accompanying drawings, in which:

Fig. 1 is a perspective view of a system for large users in accordance with the present invention having air reservoir--walls and a vane rotor with a vertical axis;

Fig. 2 is a vertical section of the system along the line II-II of Fig. 4 illustrating the engaging and disengaging mechanism of compressor, the generator and the generator fan driven by the compressed air from the air reservoir-walls;

Fig. 3 is a top view of the system assembly;

Fig. 4 is a median cross section of the system assembly;

Fig. 5 is a detail in enlarged scale of the engaging and disengaging mechanism of the vane rotor with the generator of Fig. 2 partially cutaway;

Fig. 6 is a top view partially cutaway of a second embodiment of the system for smaller users in accordance with the present invention, in which the central covering is removed;

Fig. 7 is a front view of the embodiment of Fig. 6;

Fig. 8 is a section along the line III-III of Fig. 6;

Fig. 9 is a schematic side view of a third embodiment of a system in accordance with the present invention, in which the energy is stored by hydraulic means; and

Fig. 10 is a schematic, longitudinal, vetical section of a modification of the system in accordance with the present invention, in which the energy is stored by mechanical means.

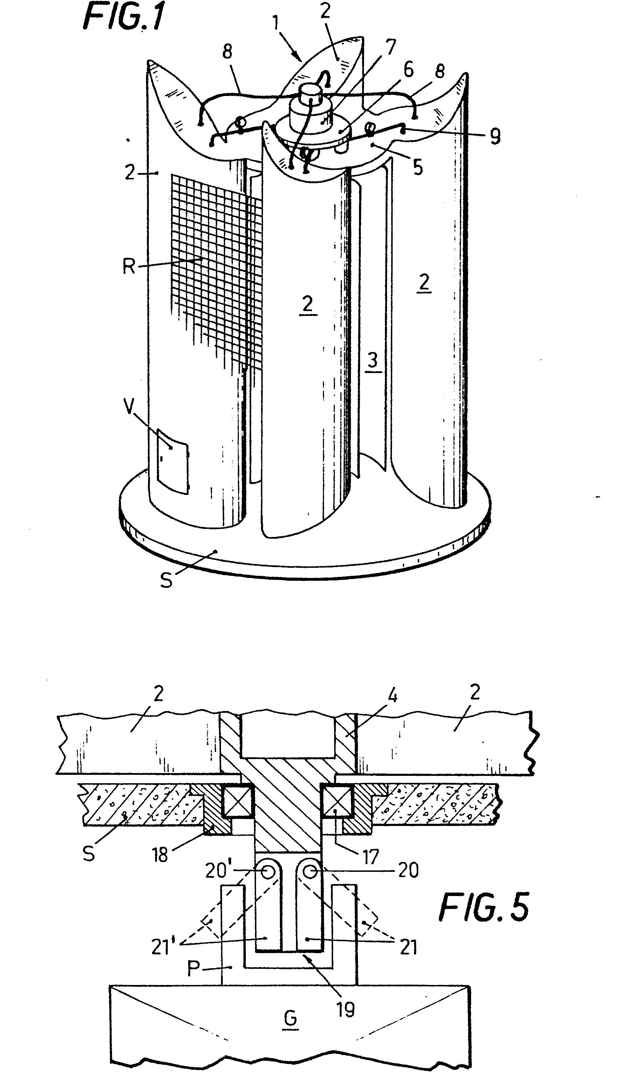

In Fig. 1 an aeolian energy capture, storage and exploitation system for large users according to the present invention is generally designated with 1. The air reservoir-walls, in this case in a number of four, resting on a slab S are designated with 2; the vanes of the rotor are designated with 3. The slab covering the rotor and being integral with the air reservoir-walls 2 is designated with 5, while at the middle thereof a flange 6 is mounted which is driven below by jacks causing the clutch mechanism (not shown in Fig. 1) engaging and disengaging the compressor 7 to be raised and lowered.

The hoses conveying air from the compressor to the interior of the air reservoir-walls 2 are designated with 8 and the hoses through which the compressed air comes out from the air reservoir-walls 2 to supply the above mentioned jacks (not shown in Fig. 1) which will be described herebelow are designated with 9.

A protection net R is layed between the air reservoir-walls 2, within one of which a space V can be formed for the installation of the equipment controlling the system.

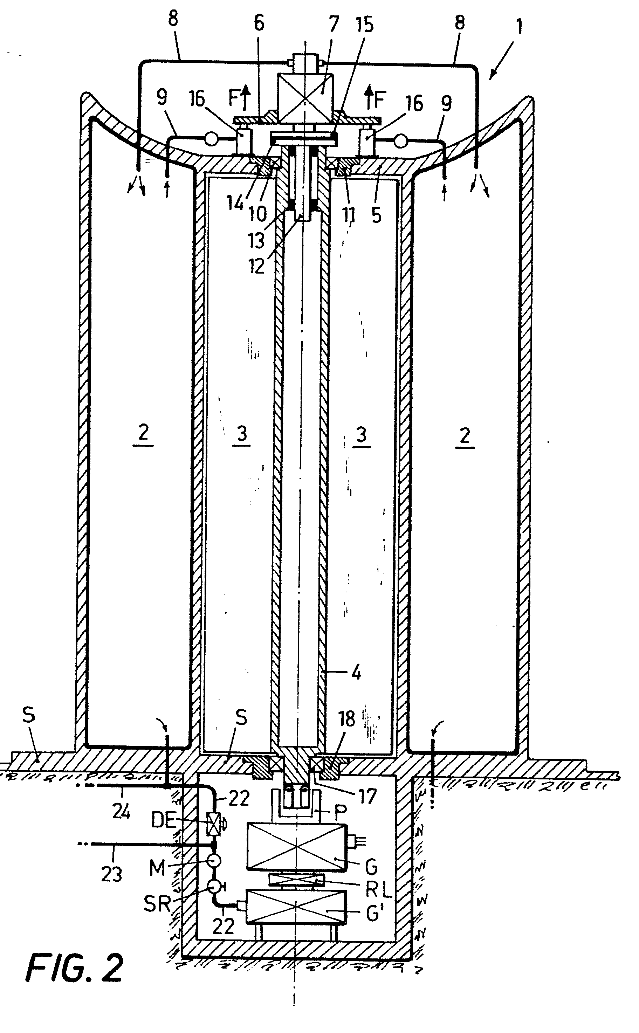

In Fig. 2 the interior of the system 1 with the engaging and disengaging mechanism of the compressor and the generator is illustrated in detail, The shaft 4 of the vane rotor is journalled on the upper side so as to freely rotate in a bearing 10 which is mounted on a flange 11 embedded in the covering slab 5. Integral with the shaft 4 by means of spacers 13 a pin 12 is provided supporting a first clutch disk 14 which is translationally fixed. On the covering slab 5 jacks 16 are placed, which by the thrust of the compressed air coming from the air reservoir-walls 2, when the pressure produced therein exceeds a preset level, raise in the direction of the arrows F the flange 6 supporting integrally the compressor 7 and also a second clutch disk 15 which, when it is disengaged from the first, dynamically fitted and translationally fixed clutch disk 14, stops the motion of the compressor, so that the vane rotor 3 carries on its rotation by the action of the wind. The upwards and downwards motion of translation of the assembly consisting of the compressor 7, the flange 6 and the second clutch disk 15 is such as to do not cause any trouble to the hoses 8 conveying the air of the compressor 7 to the air reservoir-walls 2. The shaft 4 of the vane rotor is journalled on the lower side so as to freely rotate in a bearing 17 which is mounted on a flange 18 embedded in the base slab S.

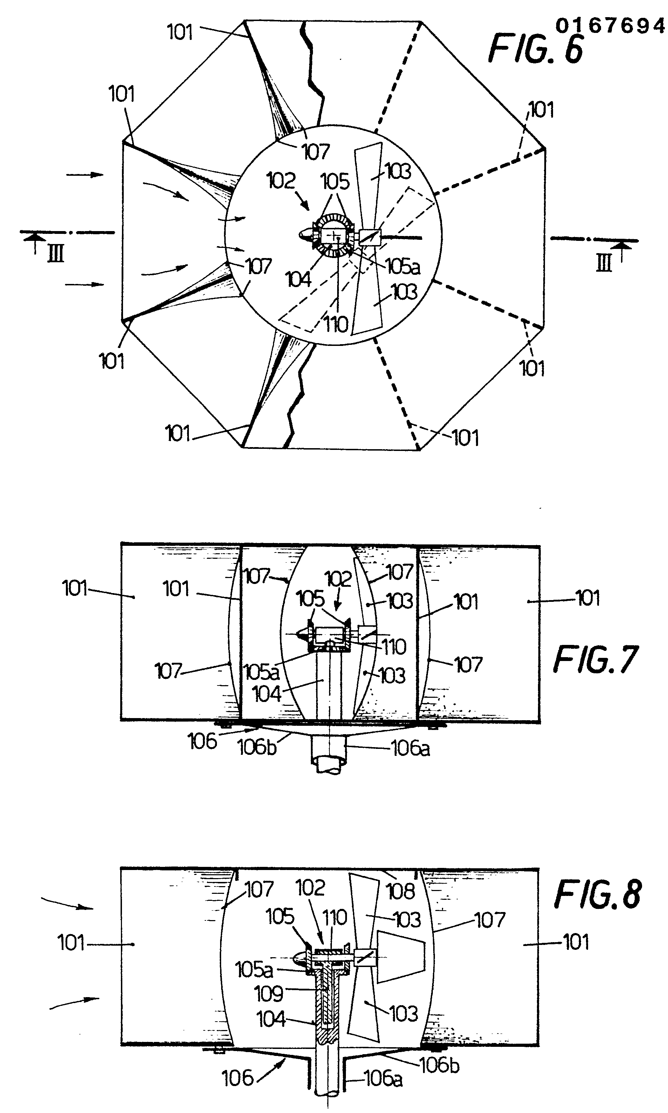

As it is better evident in Fig. 5 the shaft 4 is provided with an extension or tail shaft 19 having two diametrally opposed recesses within each of them pins 21, 21' are housed which are pivoted in 20, 20', respectively. This extension of the shaft 4 with its pins 21, 21' pivoted in 20, 20', respectively, protrudes within a U-shaped piece P provided in turn with two diametrally opposed grooves (not shown in Fig. 5), the U-shaped piece P being integral with the shaft of a lower generator G. When the shaft 4 is at rest, i.e. when the wind fails to blow, the two pins 21, 21' are vertically shifted by the gravity within the respective recesses and the shaft of the generator G is disengaged from the vane rotor. When the shaft 4 begins to rotate by the action of the wind, the pins 21, 21' are raised by the centrifugal force and swing around their respective pivots 20, 20' assuming the position shown by dashed lines and engaging the respective vertical grooves formed in the U-shaped piece.

Now turning to the Fig. 2 it should be noted that under the generator G and then also under the rotor a fan G' is provided to which a hose 22 coming from the air reservoir-walls 2 is connected. Along this hose a device DE is provided which controls manually, electronically or pneumatically either the opening or the closing of the passageway of the compressed air providing for the pressure control of the air current flowing from the air reservoir-walls 2 to the fan G'. When the vane rotor is rotated by the wind, the generator G is directly driven by the aeolian energy.

When the wind subsides, the generator G is rotated by the fan G' driven by the compressed air stored in the air reservoir-walls 2. The fan G' is connected to the generator G by a free-wheel mechanism RL which disengages the fan G' when the generator G is rotated directly by the action of the aeolian energy on the vane rotor.

Finally a hose 23 branched off from the hose 22 leads to the controls placed, for example, intthe cavity V of one of the air reservoir-walls 2, and along the hose 22 downstream of the hose 23 a manometer M and a gate valve SR are provided. A hose 24 provides for the connection and the supply of users operating with compressed air.

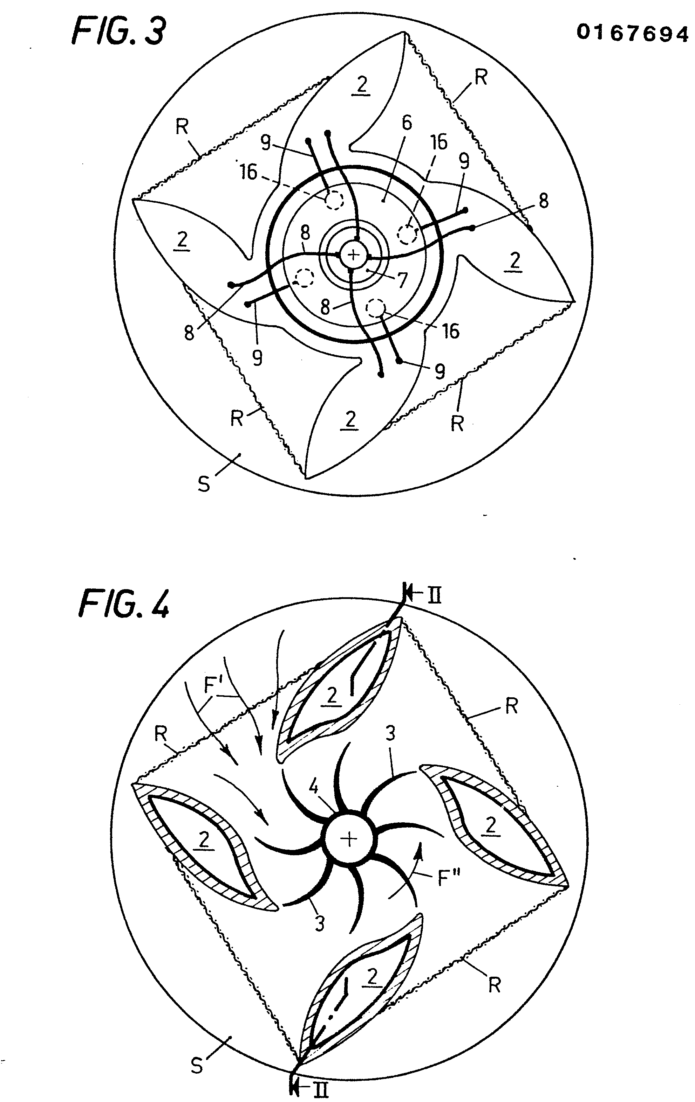

Fig. 3 shows the system in top plan view. The air reservoir-walls 2 with the protection net R, the jacks 16 with the respective hoses 9, the flange 6 and the compressor 7 with the respective hoses 8 are shown therein.

Fig. 4 shows the system in cross sectional view. The arrows F' indicate the inlet of the wind between two adjacent air reservoir-walls and the arrow F" indicates the sole direction of rotation of the vane rotor 3.

In Fig. 6 a second embodiment is shown concerning a system for the capture of the aeolian energy by means of a vane rotor having a horizontal axis for smaller users. The wind-conveying walls, in this case in a number of eight, are designated with 101 and are radially placed with their internal edges aligned along the base circumference of a circular right cylinder. In their vertical extension these internal edges can be considered coincident with the generating lines of said cylinder. A shaft of rotation 104 extends along the central axis of this cylinder and is rotated by the vanes 103 of a rotor having a horizontal axis and being generally designated with 102. The rotor 102 is driven by the shaft 104 by means of a bevel gear assembly 105, 105a consisting of ring gears and side pinions. Two bevel gears (side pinions) 105 are integral with the horizontal axis of the rotor 102; the ring gear 105a is integral with the vertical shaft 104. The dynamical coupling between both shafts is better described with reference to the Fig. 8. In Fig. 6 the surfaces of the walls 101 which are tapered inwards and have progressively accentuated concavities are designed with 107. The vanes 103 of the rotor 102, which rotate in a vertical plane eccentrically with respect to the shaft 104, and the dynamical coupling of the assembly consisting of ring gears and side pinions allow the rotor 102, whichever direction the wind is blowing from, to be always fixedly positioned for a determined direction of the wind, for example, that indicated by dashed lines in the figure. The opposed surfaces 107 of adjacent walls 101, which are tapered inwards with progressively accentuated concavities from the central, vertical lines of said walls 101, cause an increasing of the speed of the wind hitting the vanes 103 and flowing through the narrowings formed between the other pairs of walls.

Fig. 7 shows a front view of the system with a pair of walls 101. It should be noted that the surfaces 107 of the walls 101 are tapered inwards with progressively accentuated concavities and that the internal profile formed by said concave surface is oval. The walls 101 of the system are supported in this case by a mounting element which is generally designated with 106 and is formed by a fixed hollow shaft 106a and arms 106b supporting a plate on which they abut. Obviously the walls could also rest on the ground plane or a terrace. Within the fixed hollow shaft 106a the vertical shaft 104 rotates and is driven by the rotor 102 with vanes 103 by means of the gear assembly 105, 105a. The system is covered on the upper side by a cap 108. It should be noted that the diameter of the cap 108 is equal to the height of the walls 101 thus causing that the vanes 103 of the rotor 102 operate within a space of square configuration.

In Fig. 8 it is better shown the dynamical coupling between the vane rotor 102 and the vertical shaft 104 of rotation. The horizontal shaft of the rotor 102 is journalled by the bush 110 so as to freely rotate. The bush 110 is mounted on a vertical support 109 introduced in a dead hole of the shaft 104 in which the support is freely rotating but is prevented to move upwards. The side pinions 105 of the gear assembly 105, 105a, which are integral with the horizontal shaft of the rotor 102, engage the ring gear 105a integral with the shaft 104, thus arranging the rotor in its right position with respect to the direction of blowing of the wind and allowing the shaft 104 to continuosly rotate as long as the wind is blowing. The shaft 104 is connected to means for the storage of the aeolian energy as it will be described herebelow.

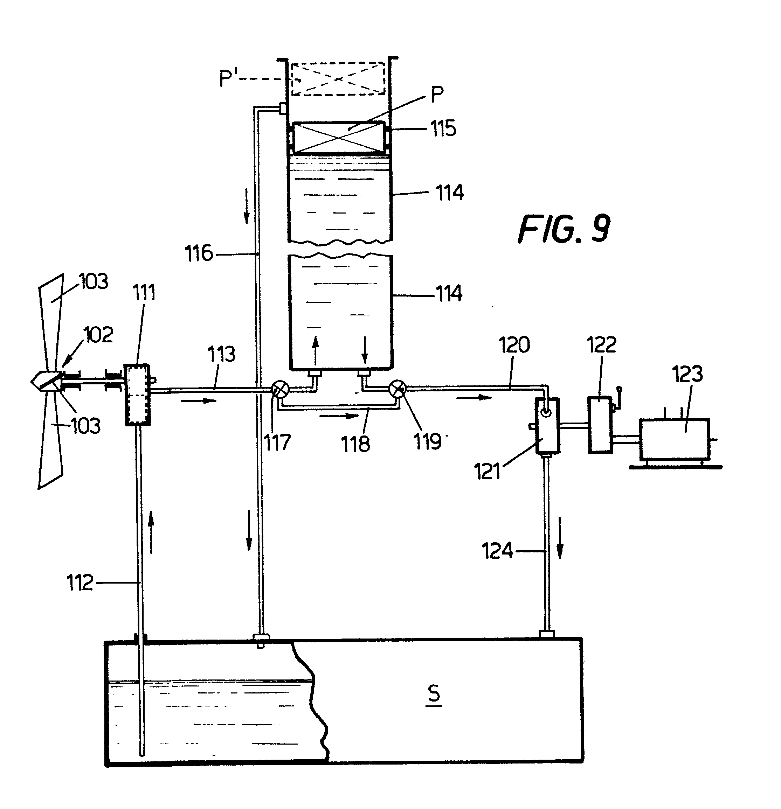

Fig. 9 shows a rotor 102 with vanes 103 which is schematically illustrated for the sake of simplicity without the wind-conveying system described with reference to the preceding figures and then with the horizontal axis directly coupled with a gear pump 111 which sucks through a conduit 112 from a tank S oil to be conveyed through a conduit 113 to a recervoir 114 within which a weight P is situated which is oil tight with the walls of the reservoir by means of sealing rings 115. An overflow tube 116 acts when the weight P has reached the position P' of upper limit which is dashed in Fig. 9.

In the conduit 113 leading to the reservoir 114 a three-way valve 117 is provided which through a by-pass 118 and a three-way valve 119 connects the conduit 113 also to a conduit 120, which in turn is connected on the one hand to the reservoir 114 and on the other hand to the turbine 121. To the latter a speed change gear 122 is connected providing for the supply of an electric power generator 123. A conduit 124 recycles the oil in the tank S.

The operation of the system is self evident. When the wind is blowing, the rotor 102 drives the pump 111 which sucks oil from the tank S trough the conduit 112 and delivers it to the conduit 113. At this moment the valve 117 is open in the directions towards the reservoir 114 and the by-pass 118. The valve 119 is closed in the direction towards the reservoir 114 and open in the direction towards the turbine 120 which drives the electric power generator 123 through the speed change gear 122.

When the weight P reaches the position P', which is shown dashed in Fig. 9, the valve 117 is closed manually or automatically in the directions towards both the pump 111 and the by-pass 118, the passageway from the pump 111 to the by-pass 118 being opened; the valve 110 remains closed towards the reservoir 114 and opened towards the turbine 120. The generator 123 will be continuosly supplied directly by the rotor 102 moved by the wind.

When the wind subsides, the valve 117 closes the passageway to the by-pass 118, and also the valve 119 closes the passageway to the same by-pass thus allowing the inlet of the oil coming from the reservoir 114. The weight P begins then to fall, thus compressing the oil and supplying the generator. The weight P, the height to which it is lifted and the quantity of fluid pumped in the reservoir should be then dimensioned with regard to both the user to be supplied and the frequency with which the wind is blowing in the area of use. The potential energy stored in the weight P will be anyhow completely restored in form of kinetic energy except, of course, for the usual loss.

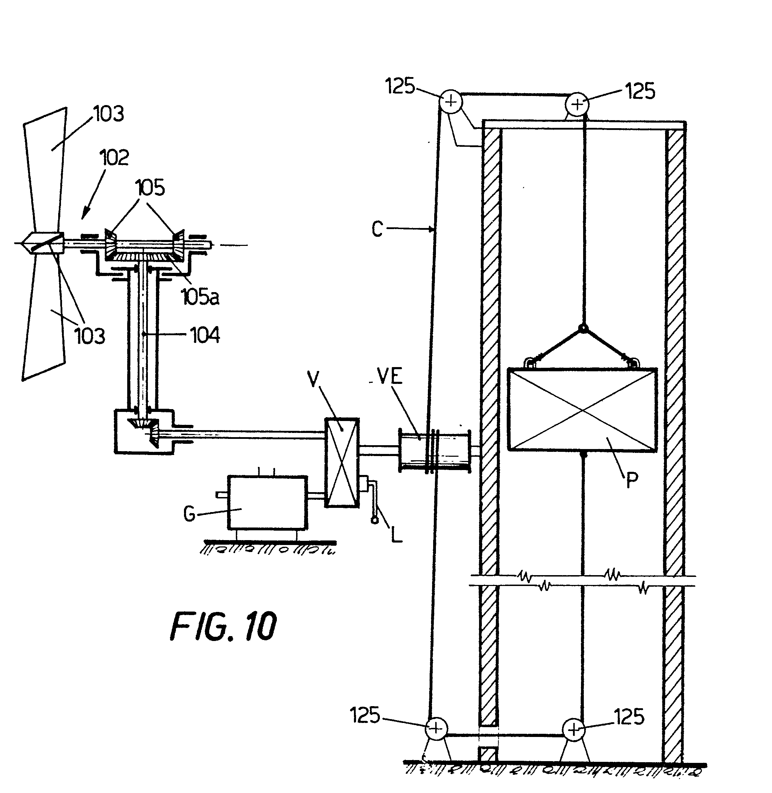

Fig. 10 shows schematically an alternative embodiment in which an aeolian energy storage system in form of fall energy is provided which makes use exclusively of mechanical means. Also in this case the wind-conveying system is omitted for the sake of simplicity. The rotor 102 with horizontal axis engages through the already described gears 105, 105a another shaft of rotation 104 which drives through a speed change gear V both an electric power generator G and a windlass VE which hoists a weight P by means of rope C and a pulley assembly 125. When the weight P reaches its highest position the lever L of a clutch device disengages the windlass VE from the rotor 102 which is still driving directly the generator G. When the wind subsides the lever L disengages the rotor 102 from the generator G and causes the latter to be engaged with the windlass VE. The operations of the lever L are of course carried out either automatically or by well-known means which it is not the case illustrated here. The weight P begins to fall down, thus driving the generator G which in turn supplies the users. Also in this case the same considerations about the preceeding storage system are valid.

The advantages achieved by the system according to the present invention for both large and small users appear evident from what above described and illustrated. The system allows a great amount of aeolian energy to be captured according to the users' needs, whichever direction and force the wind may have. Moreover the present system allows the structure of the rotating members to be elightened with the consequence of a saving of overall dimensions and cost as the wind is captured by fixed members. Finally the system of the present invention allows the energy to be stored in the desired amount and at a controlled price and to be exploited when the wind subsides.

The preferred forms of the present invention described herein are to be considered as exemplifying and then not restrictive embodiment in that the arrangement, the proportions and the dimensions can be modified without parting from the scope of the invention.

CLAIMS

1. Aeolian energy capture, storage and exploitation system for large and/or small users in order either to provide electric power or pneumatic energy directly from the system and/or from aeolian energy storage means in form of compresse air and/or potential energ., characterized in that the wind is captured by means of a stationary system consisting of walls (2) of concrete or reinforced concrete, which are hollow inside, suitably oriented, shaped and dimensioned so as to form in pairs narrowings around a vane rotor (3) which is connected at its upper end with a compressor (7) which lets pressurized air in each wall (2), and at the lower end to an electric power generator (G), said walls (2) thus acting as compressed air reservoirs which automatically supply the electric power generator (G) when the wind subsides, and the generator (G) thus being caused to be disengaged from the rotor, and the compressor (7) being automatically switched off at a predetermined value of the internal pressure in the air reservoir-walls (2), while a fan (G') supplied with the air stored in the air reservoir-walls (2) provides for the drive of an electric power generator (G).

2. System according to claim 1, characterized in that said reservoir-walls (2) are shaped in form of spindles, their ends directed to the center of the system being slightly curved so that each side of said ends, which is directed to the interior of the system, provides an arch of circumference having its geometric center at the axis of the vane rotor (3) placed at the center of said ardes, the bending radius of which is nearly equal to that of the vanes, the wind being thus captured whichever direction it is blowing from and the vane rotor (3) being caused to rotate in only one predetermined direction.

3. System according to claim 1, characterized in that the volume of the air reservoir-walls (2) is dimensioned as a function of the energetic demand of the stated users, and in that the orientation of said walls (2) is determined according to the topographic conditions of the area concerned and the direction of the winds.

4. System according to claim 1, characterized in that the vane rotor (3) which is placed at the center of the air reservoir-walls (2) is rotatably journalled at the lower side in a bearing (17) mounted on a flange (18) which is embedded in the base slab (S) of the air reservoir-walls (2), and in that the shaft (4) of the vane rotor (3),which is connected to an electric power generator (G), is also connected to a fan (G') through a free-wheel mechanism (RL).

5. System according to claim 4, characterized in that according to whether the wind is blowing or not, the electric power generator (G) is automatically disengaged from the shaft (4) of the vane rotor (3) by means of a device (19; 20, 20'; 21, 21'; P) operating by gravity and centrifugal force, and in that said generator, when disengaged from the shaft (4), is driven by the fan (G') through the free-wheel mechanism (RL) which is manually, electronically or pneumatically controlled by a device (DE).

6. System according to claim 5, characterized in that the device (19; 20, 20'; 21, 21'; P) operating by gravity and centrifugal force comprises an extension of the shaft (4) or tail shaft (19) of the vane rotor (3) which is provided with two diametrally opposed recesses, and in that pins

0167694

(21, 21') are housed in said recesses and pivoted in seats (20, 20') which are formed in the upper part of said recesses, respectively, and in that the pins (21, 21') are lodged in said recesses, when the shaft (4) is at rest in case the wind subsides, and are pushed away therefrom by the centrifugal force, when the shaft (4) of the vane rotor (3) is rotated by the thrust of the wind, and engage a U-shaped member (P) which is integral with the shaft of the lower electric power generator (G).

7. System according to claim 5, characterized in that when the wind subsides, a manual, electronic or pneumatic device (DE) is provided which allows the compressed air stored in the air reservoir-walls (2) to be supplied to the fan (G') which provides for the operation of the generator (G) through the free-wheel mechanism (RL).

8. System according to claim 1, characterized in that the vane rotor (3) which is placed in the middle of the air reservoir-walls (2) is rotatably journalled at the upper side in a bearing (10) which is mounted on a flange (6) embedded in the covering wall or slab (5) of the air reservoir-walls (2), and in that the shaft (4) is made integral by means of spacers (13) with a pin (12) supporting the first clutch disk (14) which is prevented to translate, and in that on said covering slab (5) jacks (16) are mounted which by the thrust of the compressed air coming out from the air reservoir-walls (2) when the pressure therein exceeds a predetermined level, cause the flange (6) supporting the compressor (7) integral therewith to be raised in the direction of the arrows (F), while allowing a second clutch disk (15) to be lifted and disengaged from the dynamical coupling with the first clutch disk (14) which is prevented to translate, thus stopping the motion of the compressor (7) when the vane rotor (3) carries on to rotate by the action of the wind.

9. System according to claims 1 to 8, characterized in that downstream of the device (DE) operated manually, electronically or pneumatically and controlling the compressed air supplyed to the fan (G'), a conduit or a hose (24) is provided leading to the controls of the system situated in the cavity (V) formed in one of the air reservoir-walls (2), and in that upstream of the manual, electronic or pneumatic device (DE) a conduit or a hose (23) is provided for the supply of users which need compressed air.

10. Aeolian energy capture, storage and exploitation system for small users, in which the energy is stored in form of fall energy and it is exploited directly from the system and/or from the storage means, characterized in that a rotor (102) having a horizontal axis and equipped with vanes (103) is mounted so as to freely rotate by 360° on a vertical shaft (104) placed at the center of air reservoir-walls (101), said vanes of the rotor rotating eccentrically with respect to said center, and in that said air reservoir-walls (101) are at least three even and straight walls having any geometric configuration with an oval, elliptical or circular cross section and being oriented to one another and to said rotor so as to form a funnel and having their internal edges spaced apart at the same distance and aligned along the generating lines of a circular right cylinder, and the surfaces (107) of opposed and consecutive walls being deviated to each other and from their respective, vertical, median lines so as to be tapered to the inside, while assuming a progressively accentuated concavity which is symmetric to that of the opposed surface, and in that the axis of the vane rotor (102) is placed in the horizontal median plane which is normal to said air-conveying walls and operates through said vertical shaft (104) an electric power generator (123; G) and/or means able to hoist a weight (P).

11. System according to claim 10, characterized in that the diameter of the circumference which is the section of the circular right cylinder, along the generating lines of which the internal edges of the air-conveying walls (101) are aligned, has a value greater than that of the length of the vanes (103).

12. System according to claims 10 and 11, characterized in that the aeolian energy is stored in form of potential energy causing a weight (P) to be hoisted within a reservoir (114), with which it is tightly engaged, by the action of a fluid drawn from a spare tank (S) and conveyed to the reservoir (114) by a pump (111) which is driven by the rotor (102),said fluid operating then by the action of said weight (P) a turbine (121) supplying an electric power generator (123).

13. System according to claims 10 and 11, characterized in that the aeolian energy is stored in form of potential energy causing a weight (P) to be hoisted by means of a windlass (VE) driven by the rotor (102), said weight (P) driving directly by the effect of the force of gravity an electric power generator (G) by controlling a lever (L) and a clutch device.

1/6

0167694

FIG.1

FIG.5

2/6

0167694

FIG. 2

FIG. 3

0167694

FIG. 4

0167694

*FIG. 6*

101
101
101
101
101
101
101
107
102
105
103
104
105a
110
103
III
III

*FIG. 7*

101
101
107
107
102
105
103
101
101
107
105
107
110
105a
104
103
106
106b
106a

*FIG. 8*

107
102
108
101
105
110
103
107
105a
109
104
103
106
106b
106a
101

0167694

FIG. 9

0167694

FIG. 10

European Patent
Office

**EUROPEAN SEARCH REPORT**

0167694
Application number

EP  84 83 0174

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | GB-A-2 107 401   (HSUEH CHING PING)<br>* Page 1, line 38 - page 2, line 54 * | 1,3,5,<br>7 | F 03 D    3/04<br>F 03 D    9/02<br>F 03 D    1/04 |
| A | EP-A-0 048 790   (PARRA)<br>* Abstract; figure 3 * | 2,4 | |
| A | GB-A-2 112 463   (ALLISON)<br>* Page 1, line 89 - page 3, line 52;  page  3,  line 103 - page 4, line 21 * | 4,7,9 | |
| A | GB-A-2 097 477   (MINORU INOUE)<br>* Page 2, line 70 - page 3, line 54 * | 10,11 | |
| A | FR-A- 544 359   (LAFOND)<br>* Page 1, line 56 - page 2, line 56 * | 12,13 | TECHNICAL FIELDS SEARCHED (Int. Cl.4)<br><br>F 03 D |

The present search report has been drawn up for all claims

| Place of search | Date of completion of the search | Examiner |
|---|---|---|
| THE HAGUE | 21-10-1985 | DE WINTER P.E.F. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82